# EUROPEAN PATENT APPLICATION

(11) **EP 1 639 893 A1**
(43) Date of publication of application: **29.03.2006**
(21) Application number: 05255839.2
(22) Date of filing: 21.09.2005
(51) Int. Cl.: A01N 25/00, A01N 25/26, A01N 25/10, A01N 61/00, A01P 11/00

(54) **Composite Rodenticide**

(30) Priority: 22.09.2004 GB 0421121
(71) Applicant: Natrocell Technologies Limited, London, E14 5DY (GB)
(72) Inventor: Dawson, William, Medstead Alton Hampshire GU34 5PP (GB)
(74) Representative: Doble, Richard George Vivian

(57) **Abstract**

A non-toxic rodenticide comprises water-rodenticidal material such as alphacellulose (10) encapsulated within an enteric coating (11) of gastroresistant material such as glassy amylase or an acrylic polymer. The enteric coating can be pH-sensitive redox-sensitive or sensitive or enzymes in the gastrointestinal system of a rodent so as to release the water-retentive material at a site such as the caecum for example where it is particularly effective in disrupting water transport and ion transport through the gut wall. This effect causes the rat to weaken and die in a humane manner. In a variant, the water-retentive material is incorporated in a matrix of the gastroresistant material.

## Description

The present invention relates to rodenticides composed of water-retentive rodenticidal material.

It is known from WO 2004/06230-A and DE 10051065A to provide rodenticidal pellets composed of particulate calcium sulphate hemihydrate encapsulated within a waterproof coating. These patent applications teach that the waterproof coating is dissolved by the acidic stomach juices of rodents after ingestion of the pellets, allowing the calcium sulphate to absorb water and solidify within the digestive system. WO 2004/062362 specifically discloses coatings incorporating basin amino groups which are insoluble at neutral pH's but dissolve at the (highly acidic) pH of the rodent stomach. Acrylic acid derivatives and cellulose ether - based coatings are also disclosed in this document. However calcium sulphate-based rodenticides have not been commercially successful, owing to their limited effectiveness.

Our earlier patent GB 2,311,464B discloses and claims non-toxic rodenticides comprising rodenticidal cellulosic material obtaining from the corn of the cob of certain maize hybrids, notably the DK 446 hybrid but also cellulosic material from other hybrids. Such rodenticides are commercially available under the trade names ERADIRAT (RTM) and ERADIMOUSE (RTM) and have proven to be highly effective.

Our published International patent application WO 02/056693A teaches that such rodenticidal materials disrupt water transport through the gut wall of rodents, particularly water transport through ion channels. The above patent application also teaches that in rats, such materials compromise their digestion in the caecum. In humans and other animals the caecum is vestigial and has no digestive action on the cellular support material for the cellulose or the cellulose itself.

A controlled study has now been completed wherein cellulose powder (used as an additive in pharmaceutical preparations) was given to rats as an aqueous slurry (oral gavage) and was not effective as a rodenticide.

Without wishing to be bound by theory, it is now considered that the rodenticidal properties of cellulose-based rodenticides such as those disclosed in GB 2,311,464B may be due to the gradual availability of the cellulose in the intestine of the rodent as the cell walls are digested.

It has also been established that such cellulose-based rodenticides enhance the activity of ion channels (particularly chloride channels) in the gut wall of rodents, and it is considered that this secretion of anions (particularly chloride ions) results in dehydration by osmosis. It is likely that hydroxyl ions are secreted similarly to chloride ions.

Accordingly, in one aspect the invention provides a composite rodenticide comprising:
a) water-retentive rodenticidal material; and
b) a synthetic enteric coating or matrix of gastroresistant material which inhibits gastric action on said rodenticidal material in the stomach of a rodent.

It is merely necessary for the "water-retentive rodenticidal material" to cause water retention in the lumen of the gastro-intestinal tract *in vivo* e.g. by facilitating ion transport and hence water transport through the gut wall. It is not necessary for the material itself to adsorb or absorb water. The term "water-retentive" is to be construed accordingly. Preferably the water-retentive material causes water retention in the lumen of the colon *in vivo.*

One class of materials which result in water-retention within the lumen of the gut by facilitating ion transport are phosphodiesterase inhibitors.

One class of ion channels important in apical chloride secretion (and hence water retention in the lumen of the intestine) are the cyclic Adenine MonoPhosphate (cAMP) - chloride channels. cAMP activates the Cystic Fibrosis Transmission Receptors (CFTR) amongst others which cause apical chloride secretion. cAMP breakdown can be inhibited by PhosphoDiEsterase Inhibitors (PDEI) which are therefore suitable for causing water retention in the practice of the present invention. In particular, PDE4 inhibitors are considered highly suitable, although PDE1, PDE2, PDE3, PDE5 and PDE6 inhibitors are also suitable. PDE4 inhibitors are known for e.g. asthma treatment.

Water-absorbtive and water-adsorbtive materials are known as such, and include calcium sulphate hemihydrate, as well as cellulosic materials. JP 2304007A discloses hightly water absorptive resins including starch-acrylenitrile graft copolymer and cellulosic acrylonitrile graft copolymer but the rodenticides of the present invention preferably employ less strongly water-absorptive cellulosic materials.

As will become apparent from the description below, the synthetic coating or matrix can be selected to mimic the effect of the natural gastroresistant coating or matrix in corn cob material. In principle the material used for forming the coating or matrix employed in the present invention can be synthetic or of natural origin.

Synthetic enteric coatings are known and used to protect pharmaceuticals used for treatment of human beings in order to deliver drugs such as insulin, calcitonen and vasopressin in the colon and to protect the drug from gastric action in the stomach. James S. Chu "Advances in Colon-specific Drug Delivery System Employing the CODESTM" The Drug Delivery Companies Report Autumn/Winter 2003 pp 36-40 (available online at www.worldpharmaweb.com which is hereby incorporated by reference provides an overview of different types of enteric coatings, including pH-sensitive coatings such as Eudragit (RTM) a commercially available acrylic polymer, and polysaccharide coatings which are degradable by microflora in the colon.

Additionally, US 6,228,396 discloses pharmaceuticals in the form of a starch capsule containing the drug and an enteric coating which maybe a pH-sensitive material, a redox sensitive material, or a material broken down by specific enzymes or bacteria present in the colon of a human being. Enteric coatings which can be tailored to dissolve at a desired pH are disclosed, based on Eudragit L100 and Eudragit S100. Eudragit L100 dissolves at pH 6 and upwards and comprises 48.3 percent methacrylic acid units per gram of dry substance (the balance being methylmethacrylate) whereas Eudragit S100 which dissolves at pH 7 and upwards comprises 29.2 percent methacrylic acid units per gram of dry substance (the balance being methylmethacrylate). A preferred composition is taught for delivery to the human colon and in accordance with the present invention a similar approach can be followed to provide an enteric coating suitable for delivery of water-retentive rodenticidal material to the intestine of a rat or other rodent on the basis of a knowledge of the pH distribution in a rodent's gastrointestinal tract. US 6,228,396 also discloses redox-sensitive enteric coatings consisting of e.g. a random copolymer of styrene and hydroxyethyl methacrylate, crosslinked with divinyl azobenzene. The zopolymer is broken down enzymatically under the reducing conditions of the human colon. It is understood that similar reducing conditions would occur in the colon of a rodent. Additionally, this patent discloses certain modified starches such as glassy amylose that are not broken down by the enzymes in the upper gastrointestinal tract but are degraded by enzymes in the colon of a human being and are therefore suitable for use in enteric coatings. Such materials can also be employed in the present invention.

Additionally, modified release coatings are known for use in human pharmacy which can either delay the release of a drug for a predetermined period or extend the release of drug over a number of hours. Such coatings are commercially available under the tradenames SURELEASE (RTM), ETHOCEL (RTM) and METHOCEL (RTM). The above materials are cellulosic polymers based on hydroxy propylmethyl cellulose (HPMC), ethyl cellulose or methyl cellulose. Such coating materials may be used in the rodenticides of the present invention and are particularly suitable because they are cellulose based and therefore mimic to some degree the properties of cellulose in plant material (but not its water-retentive properties). In particular, they are more likely to be acceptable to a rodent than synthetic materials with a distinctive odour or taste.

As an alternative to a discrete coating, the gastroresistant material may be formed as a matrix with the water-retentive rodenticidal material incorporated therein, e.g. in particulate form.

In a preferred embodiment the composite rodenticide of the present invention utilises an enteric coating or matrix which is pH-sensitive so as to be selectively dissoluble in the intestine of the rodent.

In a particularly preferred embodiment, the enteric coating or matrix is arranged to be selectively dissoluble in the caecum or the rodent. In an alternative embodiment, the enteric coating or matrix is arranged to be selectively dissoluble in the small intestine and/or in the colon of the rodent. The composition of the enteric coating or matrix can be adjusted to achieve selective dissolution at the required site on the basis of the varying pH and/or bacterial and/or enzymatic environment along the gastrointestinal tract of a rodent. Furthermore, the site of deposition can be selected on the basis of the rate of transit of ingested material through the gastrointestinal tract, using modified release coatings such as those referred to hereinabove, for example.

Preferably the rodenticidal material is non-toxic to humans. However, it may be possible to provide a coating or matrix which dissolves in the intestine of a rodent but which is unaffected by the digestive system of a human.

Preferably the rodenticidal material is a carbohydrate material, e.g. cellulosic material, more preferably alpha-cellulose.

In a preferred embodiment the rodenticidal material is derived from corn cobs, particularly hybridised corn cobs. A synthetic coating or matrix of such material is likely to be highly acceptable to rodents.

The enteric coating or matrix preferably incorporates an attractant.

Preferably the rodenticide is in pelletised form.

Preferably the rodenticidal material is a humane rodenticidal material which, on ingestion by a rodent, kills it without rupturing the wall of the intestine. Thus a water-adsorptive material which does not expand or expands only modestly on contact with water and thus does not rupture the wall of the wall of the intestine of the rodent, is preferred.

In another aspect the invention provides a method of killing a rodent, comprising feeding the rodent water-retentive rodenticidal material, protecting the water-retentive rodenticidal material against gastric action in the stomach of the rodent, and depositing the rodenticidal material in the intestine of the rodent at a site where it disrupts water and/or ion transport through the wall of the intestine.

In particular the water-retentive rodenticidal material may enhance transport of ions (e.g. chloride ions) through the intestine wall into the lumen thereof, resulting in dehydration by osmosis.

Preferably the rodent is a laboratory rat or a laboratory mouse.

In another aspect the invention provides a method of alleviating rodent infestation, the method comprising depositing in the region of infestation a rodenticide as defined hereinabove.

Preferred embodiments of the invention are described below by way of example only, with reference to Figs. 1 to 3 of the accompanying drawings, wherein:
Fig. 1 is a somewhat schematic diagram of the gastrointestinal system of a rat, as viewed on dissection;
Fig. 2 is a longitudinal cross-section through a rodenticidal pellet in accordance with the invention; and
Fig. 3 is a longitudinal cross-section through another rodenticidal pellet in accordance with the invention.

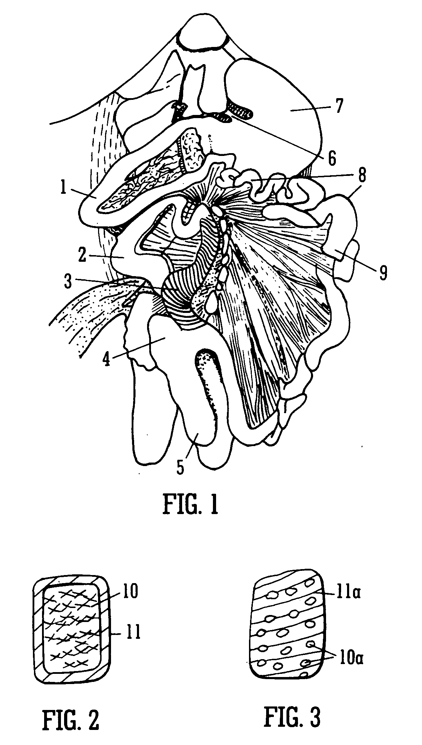

Referring to Fig. 1, material ingested by a rat passes through the oesophagus 6 to the stomach 7 where it is exposed to a relatively low pH of 1 to 4 and then passes via the duodenum 1 (at about pH 5 to 7) and the jejunum 8 (at pH 6 to 7.5) to the ileum 9 where it reaches the caecum 4 (at pH 6.5 to 8) and appendix 5. In rats, the caecum has a significant digestive action whereas in humans and other animals the caecum is vestigial. In all species the colon absorbs water from material in the lumen but the functionality of ion channels, in particular chloride channel, varies between species. The colon of rodents is most susceptible to changes in local environment. It is envisaged that the pH differences between rodents on the one hand and humans and other non-target species on the other hand will enable the pH-sensitivity of the coating to be selected to confer further selectivity on the composite rodenticides of the invention. Digestive material passes from the caecum via the colon 3 to the rectum 2 whence it is expelled.

The pH in the intestine (i.e. the jejunum 8, ileum 9, appendix 5, caecum 4 and colon 3) is significantly higher than in the stomach 7 and the enzymatic and bacterial environment varies throughout the length of the intestine, particularly at the caecum 4 and also in the colon 3 which are considered to be key sites at which the deposition of water-retentive material may effect water transport and ion transport through the wall of the gut. Accordingly, in preferred embodiments the present invention provides rodenticides in pellet form which have enteric coatings or matrixes which selectively deposit in one or both of the caecum and colon. However, in certain circumstances it may also be useful to deposit water-retentive material in the small intestine (i.e. the jejunum 8 and ileum 9), depending on the precise water-retentive material employed.

In general, the further downstream the site of deposition of the water-retentive material the less the opportunity for subsequent resorption of water through the gut wall and therefore the greater the dehydration effect.

Cellulosic material obtained from corn cobs (particularly hybridised corn cobs), can be coated with an enteric coating or incorporated in a matrix of gastroresistant material in order to protect it against digestive action and deposited further down the gastrointestinal tract than it would be without the enteric coating or matrix of gastroresistant material. Furthermore, water-retentive materials (e.g. water absorptive materials) which normally exhibit no rodenticidal action, presumably due to digestive action in the stomach or small intestine,can be modified in accordance with the present invention by coating them with an enteric coating of gastroresistant material or incorporating them within a matrix of gastroresistant material in order to protect them against such digestive action and deposit them at a sensitive site such as the caecum 4 or colon 3.

It is envisaged that conventional water-absorptive materials e.g. calcium sulphate hemihydrate will be considerably more effective if combined with an enteric coating or matrix in accordance with the invention, owing to their delivery to a more effective site (e.g. the colon).

Fig. 2 shows a pellet in accordance with the invention comprising powdered alphacellulose 10 coated with an enteric coating 11 of gastroresistant material 11 such as glassy amylose for example.

An alternative embodiment is shown in Fig. 3 in which particles 10a of powdered alpha cellulose are embedded in a matrix 11a of gastroresistant material such as glassy amylase, which is preferably arranged to dissolve progressively in the caecun, e.g. by making it dissoluble at pH 6.5 to 8.

This embodiment is preferred because the gradual release of material leads to a sustained dehydration which is more likely to be fatal than a temporary dehydration arising from a sudden release of material.

The water-retentive materials described above are all considered non-toxic to humans.

In the embodiment of Figure 2 the enteric coating 11 preferably incorporates or is coated with a suitable attractant and in the embodiment of Figure 3 the matrix 11a also preferably incorporates a suitable attractant.

## Claims

1. A composite rodenticide comprising:
a) water-retentive rodenticidal material; and
b) a synthetic enteric coating or matrix of gastroresistant material which inhibits gastric action on said rodenticidal material in the stomach of a rodent.

2. A composite rodenticide according to claim 1 wherein said water-retentive rodenticidal material causes retention of water in the lumen of a rodent intestine by increasing apical ion transport through the intestine.

3. A composite rodenticide according to claim 2 wherein said water-retentive material is a phosphodiesterase inhibitor.

4. A composite rodenticide according to claim 3 wherein said phosphodiesterase inhibitor is a PDE4 inhibitor.

5. A composite rodenticide according to claim 1, wherein said water-retentive rodenticidal material is a water-absorptive or water-adsorptive carbohydrate material, optionally cellulosic material.

6. A composite rodenticide according to any preceding claim, wherein said rodenticidal material is a humane rodenticidal material which on ingestion by a rodent, kills it without rupturing the wall of the intestine.

7. A composite rodenticide according to any preceding claim, wherein said enteric coating or matrix is pH-sensitive so as to be selectively dissoluble in the intestine of the rodent, or is redox-sensitive, or is degraded by colonic bacterial enzymes.

8. A composite rodenticide according to claim 7, wherein said enteric coating or matrix is a methyl(meth)acrylate polymer or a copolymer of (meth)acrylic acid and methyl(meth)acrylate, or is composed of glassy amylase, a polysaccharide or a modified guar gum.

9. A composite rodenticide according to any of claims 1 to 6, wherein said enteric coating or matrix is composed of cellulosic material.

10. A composite rodenticide according to any preceding claim, wherein said enteric coating or matrix is selectively dissoluble in the caecum of the rodent or is selectively dissoluble in the small intestine and/or the colon of the rodent.

11. A composite rodenticide according to any preceding claim, wherein said discrete enteric coating or matrix is a sustained-release coating or matrix which breaks down progressively during passage of the rodenticide through the intestine of the rodent.

12. A composite rodenticide according to any preceding claim, wherein said water-retentive rodenticidal material is non-toxic to humans.

13. A method of alleviating rodent infestation, the method comprising depositing in the region of infestation a rodenticide as claimed in any of claims 1 to 12.

14. A method of killing a rodent, preferably a laboratory rat or a laboratory mouse, comprising feeding the rodent water-retentive rodenticidal material, protecting the water-retentive rodenticidal material against gastric action in the stomach of the rodent, and depositing the rodenticidal material in the intestine of the rodent at a site where it disrupts water transport and/or ion transport through the wall of the intestine.

15. A method according to claim 14 wherein apical ion transport through the wall of the intestine is enhanced by said water-retentive rodenticidal material.

16. A method according to claim 19 wherein said water-retentive material is a phosphodiesterase inhibitor (PDEI), for example a PDE4 inhibitor.
